# NEUE EUROPÄISCHE PATENTSCHRIFT

(11) **EP 0 669 506 B2**
(45) Veröffentlichungstag und Bekanntmachung des Hinweises auf die Entscheidung über den Einspruch: **19.11.2003**
(45) Hinweis auf die Patenterteilung: 28.07.1999
(21) Anmeldenummer: 95100520.6
(22) Anmeldetag: 17.01.1995
(51) Int. Cl.: F25B 39/04, F25B 43/00

(54) **Kondensator für eine Klimaanlage eines Fahrzeuges**
Condenser for an air conditioning equipment of a vehicle
Condenseur pour une installation de climatisation d'un véhicule

(30) Priorität: 01.02.1994 DE 4402927
(43) Veröffentlichungstag der Anmeldung: 30.08.1995
(73) Patentinhaber: Behr GmbH & Co., 70469 Stuttgart (DE)
(72) Erfinder: Burk, Roland, Dipl.-Phys., D-70469 Stuttgart (DE); Rojnica, Werner, Dipl.-Ing., D-73734 Esslingen (DE)
(74) Vertreter: Wallinger, Michael, Dr.-Ing.

(56) Entgegenhaltungen:
- EP-A- 0 480 330
- WO-A-94/11686
- DE-A- 4 319 293
- JP-A- 2 267 478
- JP-A- 4 043 271
- JP-A- 4 131 667
- US-A- 3 064 819
- US-A- 4 745 772
- US-A- 4 972 683
- US-A- 5 088 294
- US-A- 5 146 767
- US-A- 5 159 821
- US-A- 5 228 315
- US-A- 5 245 842

## Beschreibung

Die Erfindung betrifft einen Kondensator für eine Klimaanlage eines Fahrzeuges mit einem von Kältemittel durchströmten Rohr-Rippen-Block, der beidseits jeweils mit einem Sammelrohr versehen ist, wobei parallel zu einem der Sammelrohre ein rohrförmiger Sammlerangeordnet ist, der mit dem zugehörigen Sammelrohr in Strömungsverbindung steht und ein Filtersieb enthält.

Aus der US-A 5 159 821 ist ein Kondensator der eingangs genannten Art bekannt. Bei dieser Bauart schließt an den Boden eines Sammelrohres ein Führungsrohr an, das durch den Boden des zugehörigen Sammlers hindurch nach oben in diesen Sammler hineinführt und sich bis zu einem unlösbar an dem Sammler befestigten Deckel erstreckt. Das Rohr durchdringt dabei einen Filter, der nach unten auf einem Ringbund des Rohres abgestützt ist. In dem Sammler oberhalb des Filters befindet sich ein Trocknermaterial. Das Rohr ist in dem oberhalb des Filters befindlichen Abschnitt perforiert, so daß dort Kältemittel aus ihm austreten kann, das dann durch das Trocknermaterial hindurch und durch das Filtersieb hindurch in den Bereich des unteren Endes des Sammlers gelangen kann, aus welchem es mittels eines Abflußrohres zu einem Expansionsventil geführt wird. Das Filtersieb und das Trocknermaterial sind für eine Wartung o.dgl. nicht zugänglich.

Der Erfindung liegt die Aufgabe zugrunde, einen Kondensator der eingangs genannten Art so weiterzubilden, daß die Funktionsfähigkeit aufgrund einer Wartungsmöglichkeit verbessert ist.

Diese Aufgabe wird durch die Merkmale des Patentanspruchs 1 gelöst.

Aufgrund der erfindungsgemäßen Ausbildung ist das Filtersieb in einfacher Weise zugänglich undaustauschbar. Es ist dadurch möglich, mittels eines einfachen Wartungsvorganges den Zustand des Filtersiebes zu überprüfen und gegebenenfalls zum Verbessern der Funktion der Klimaanlage oder zur Aufrechterhaltung der Funktion auszutauschen.

Es wird auch sichergestellt, daß die gesamte Kältemittelmenge durch das Filtersieb strömt, so daß das Kältemittel wirksam gereinigt ist.

Weitere Vorteile und Merkmale der Erfindung ergeben sich aus der nachfolgenden Beschreibung der in den Zeichnungen dargestellten Ausführungsbeispielen
- Fig. 1: zeigt einen Schnitt durch einen ein Sammelrohr und einen Sammler aufweisenden Seitenbereich eines erfindungsgemäßen Kondensators,
- fig. 2: einen Schnitt nur durch einen Sammler und
- Fig. 3: einen Schnitt durch den Sammler der Fig. 2 und eine Ansicht auf den in dem Sammler befindlichen Einsatz in Richtung des Pfeiles III der Fig. 2.

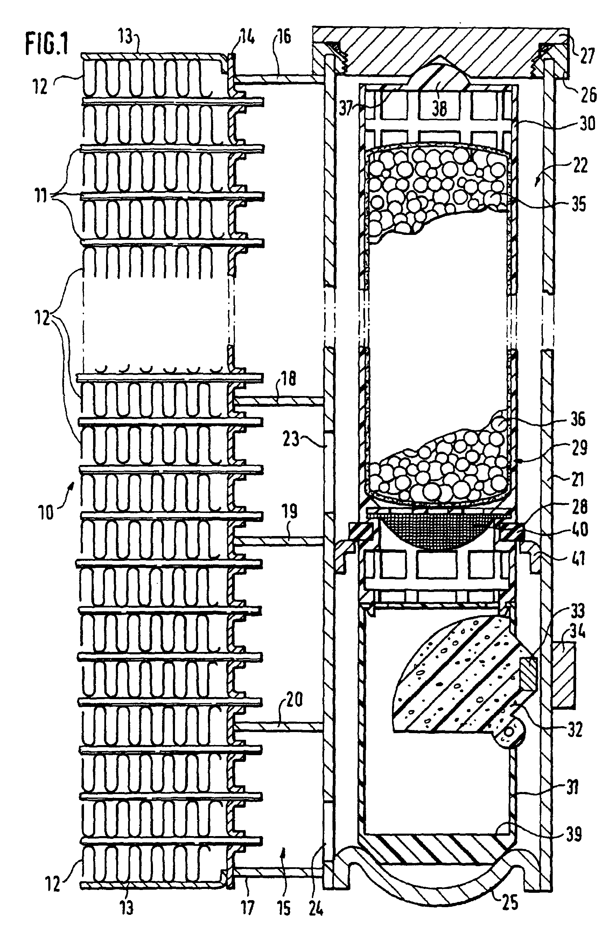

Der in Fig. 1 nur zum Teil dargestellte Kondensator besitzt einen Rohr-Rippen-Block (10) aus einer Vielzahl von Flachrohren (11) und Wellrippen (12). Die jeweils äußersten Wellrippen (12) sind mittels eines Abschlußbleches (13) abgedeckt. Die Enden der Flachrohre (11) sind in einen mit Durchzügen versehenen Boden (14) eingesteckt, was auch für die Enden der Flachrohre auf der gegenüberliegenden, nicht dargestellten Seite gilt. Die Böden (14) werden mittels Abdeckungen zu Sammelrohren (15) geschlossen, die durch Abschlußwände (16, 17) und Trennwände (18, 19, 20) unterteilt sind.

Der Boden der in Fig.1 nicht dargestellten Seite wird beispielsweise mittels eines Abschlußbleches verschlossen. Zum Verschluß des Bodens (14), der in Fig. 1 sichtbar ist, ist ein Rohrprofil (21) vorgesehen, das beispielsweise entsprechend der nicht vorveröffentlichten DE-Patentanmeldung 43 19 293.9 ein extrudiertes Rohrprofil sein kann, an weiches die Ränder des Bodens (14) anschließen. Auf diese Weise wird ein Doppelrohr gebildet, das zum einen als Sammelrohr (15) dient und zum anderen als ein parallel dazu angeordneter Sammler (22), der mit dem Sammelrohr (15) eine Einheit bildet. Die Trennwände (18, 19, 20) unterteilen das Sammelrohr (15) und das nicht dargestellte gegenüberliegende Sammelrohr derart, daß das oben zugeführte, dampfförmige Kältemittel mäanderförmig durch den Rohr-Rippen-Block (10) strömt, wobei die Aufteilung mittels der Trennwände (18, 19, 20) derart gewählt ist, daß entsprechend der zunehmenden Kondensierung die Strömungsquerschnitte verringert werden.

Das Sammelrohr (15) ist vor der Trennwand (19) mit einer Verbindungsöffnung (23) zu dem Sammler (22) hin offen. Das dort bereits schon flüssige Kältemittel strömt über diese Verbindungsöffnung (23) zu dem Sammler (22), von welchem es über eine untere Verbindungsöffnung (24) zu dem Sammelrohr (15) zurück strömt. Das Kältemittel wird in dem unteren Bereich des Kondensators in einer Unterkühlstrecke noch einmal mäanderförmig geführt, wonach es aus dem Bereich des Sammelrohres (15) zwischen den Trennwänden (19, 20) zur gegenüberliegenden Seite zu einem Kältemittelauslaß gelangt.

Das Rohrprofil (21) des Sammlers (22) besitzt im wesentlichen die gleiche Höhe wie der Boden (14), d.h. der Sammler (22) erstreckt sich über die gesamte Höhe des Kondensators. Das untere Ende des Rohrprofils (21) ist mittels eines eingesetzten, schalenförmigen Bodens (25) verschlossen. Das obere Ende des Rohrprofils (21) ist mit einer ein Innengewinde aufweisenden Fassung (26) versehen, die als Aufnahme für einen lösbaren Deckel (27) dient.

Bei der Herstellung des Kondensators wird der Rchr-Rippen-Block (10) mit den Boden (14), den Abschlußwänden (16,17), den Trennwänden (18, 19, 20) sowie mit dem Rohrprofil (21), dessen Boden (25) und dessen Fassung (26) sowie auf der gegenüberliegenden Seite mit einem Abschluß für den dort befindlichen Boden paketiert und dann in einem Ofen gelötet. Hierzu sind die aus Aluminium oder Aluminiumlegierungen hergestellten Elemente zweckmäßigerweise mit einer Lotplattierung versehen.

Der Sammler (22) ist in dem Abschnitt zwischen den Verbindungsöffnungen (23, 24), der zwangsweise von dem Kältemittel durchströmt wird, mit einem Filtersieb (28) versehen. Dieses Filtersieb (28) reinigt das in diesem Bereich in der Regel flüssige Kältemittel von Partikeln, die durch Abrieb o.dgl. in das Kältemittel gelangen, so daß das Kältemittel gereinigt ist, wenn es den Kondensator verläßt.

Das Filtersieb (28) ist Bestandteil eines Einsatzes (29), der bei offenem Deckel (27) eingesetzt und nach Öffnen des Deckels (27) in einfacher Weise herausnehmbar ist. Der Einsatz besteht aus einem rohrförmigen Kunststoffkäfig (30), in den das Filtersieb (28) beispielsweise eingespritzt ist. An dem unteren Ende dieses Kunststoffkäfigs (30) ist ein im wesentlichen entsprechende Außenabmessungen aufweisendes Gehäuse (31) mittels einer Rastverbindung angebracht, das einen schwenkbar gelagerten Schwimmer (32) enthält, der einen Permanentmagneten (33) trägt, dem auf der Außenseite des Sammlers (22) ein Detektor (34) zugeordnet ist. Auf diese Weise wird ein Füllstandsdetektor geschaffen, der eine Klimaanlage auf eine Unterfüllung mit Kältemittel überwacht.

In dem Käfig (30) ist ein Säckchen (35) aus kältemitteldurchlässigem Material untergebracht, das ein Trocknergranulat (36) enthält. Der Käfig (30) ist mit einem Deckel (37) versehen, der außen mit einer halbkugelförmigen Verdickung (38) versehen ist, der eine kegelförmige Aussparung des Deckels (27) zugeordnet ist. Der geschlossene Deckel (27) zentriert somit den Einsatz (29). Das untere Ende des Gehäuses (21), das an dem Käfig (30) befestigt ist, ist mit einem kegelstumpfförmigen Boden (39) versehen, der sich innen an dem schalenförmigen Boden (25) des Sammlers (22) zentriert.

Das Filtersieb (28) befindet sich in einem Bereich des Käfigs (30), der einen geschlossenen Umfang aufweist. In diesem Bereich ist ein Dichtungsring (40) in eine umlaufende Ringnut des Käfigs (30) eingesetzt, der ein in den Sammler (22) innen eingelöteter Ringsitz (41) zugeordnet ist. Das von der Verbindungsöffnung (23) zu der Verbindungsöffnung (24) strömende Kältemittel muß somit das Filtersieb (28) vollständig durchströmen. Aus der Verbindungsöffnung (24) strömt somit ein getrocknetes und gereinigtes Kältemittel in die Unterkühlstrecke des Rohr-Rippen-Blockes (10) ab.

Bei einer abgewandelten Ausführungsform wird vorgesehen, daß anstelle eines Dichtungsringes (40) ein Dichtungsring mit einer sich an die Innenwandung des Sammlers (22) anlegender Lippe vorgesehen wird, so daß dann auf einen Ringsitz (41) verzichtet werden kann.

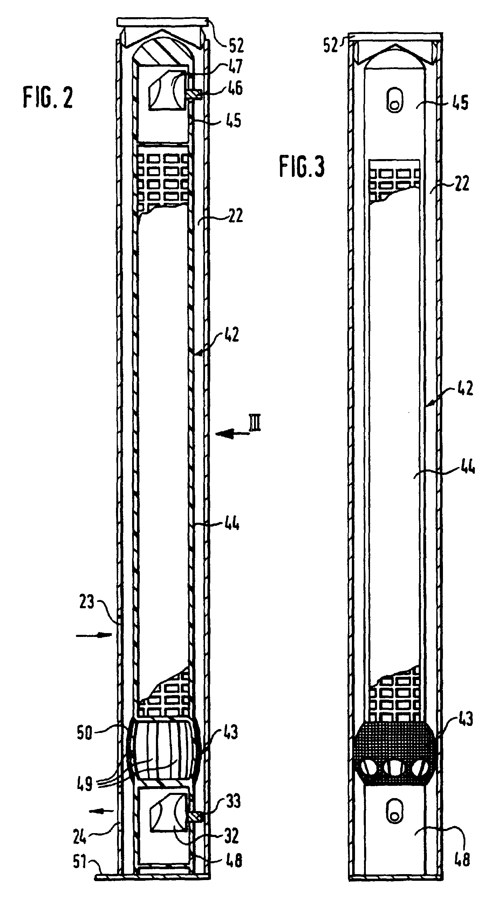

Bei der Ausführungsform nach Fig. 2 und 3 ist ebenfalls in den an ein Sammelrohr eines Kondensators angefügten Sammler (22) ein Einsatz (42) eingesetzt, der unter anderem ein Filtersieb (43) enthält. Der Einsatz (42) ist mehrteilig ausgebildet, wobei die einzelnen Teile miteinander verbunden sind, vorzugsweise mittels einer Klipsverbindung. Der mittlere Teil des Einsatzes (42) besteht aus einem rohrförmigen Kunststoffkäfig (44), in den in nicht näher dargestellter Weise ein vorzugsweise in einem Säckchen enthaltendes Trocknergranulat eingesetzt ist. Derobere Teil besteht aus einem Gehäuse (45), in welchem ein mit einem Permanentmagneten (46) versehener, schwenkbarer Schwimmer (47) angeordnet ist, der mit einem außen an den Sammler angeordneten, nicht dargestellten Detektor eine obere Füllstandsanzeige bildet. Der untere Teil besteht aus einem Gehäuse (48), das ähnlich zu dem Gehäuse (31) der Fig. 1 gestaltet sein kann. Es enthält einen Schwimmer (32) mit einem Permanentmagneten (33), der zu einer die Minimalbefüllung angebenden Füllstandsanzeige gehört. Das Filtersieb (43) ist zwischen dem Gehäuse (48) und dem Käfig (44) angeordnet, wobei es in dem Abschnitt zwischen der Verbindungsöffnung (23) und der Verbindungsöffnung (24) liegt, d.h. in einem Abschnitt, der von dem Kältemittel zwangsdurchströmt ist.

Zwischen dem Käfig (44) und dem Gehäuse (48) sind leicht nach außen gewölbte, blattfederartige Lamellen (49) angeordnet, die einteilig mit dem Kunststoffkäfig (44) und/oder dem Gehäuse (48) hergestellt sein können. Diese Lamellen (49) befinden sich innerhalb eines strumpfartigen Filterelementes (50), das beispielsweise ein Vlies sein kann, insbesondere ein Kunststoffvlies, beispielsweise aus Polyester.

In entspanntem Zustand der Lamellen (49) hat der gesamte Einsatz (42) eine axiale Länge, die etwas größer als der axiale Abstand zwischen dem Boden (51) des Sammlers und einem an dem oberen Ende befestigten Deckels (52) ist, wenn dieser Deckel (52) sich in seiner Schließposition befindet. Durch Schließen des Deckels (52), für den eine Schraubverbindung oder Bajonettverbindung o.dgl. vorgesehen wird, wird der Einsatz (42) in axialer Richtung zusammengedrückt ( Fig. 3), so daß die Lamellen (49) nach außen gespreizt werden. Sie spannen dabei das Filterelement (50) schirmartig auf, so daß es den freien Strömungsbereich zwischen der Verbindungsöffnung (23) und der Verbindungsöffnung (24) vollständig einnimmt, da es an die Innenwandungen des Sammlers (22) angedrückt wird. Wie aus Fig. 3 zu ersehen ist, kann das Filterelement (50) in Richtung zu der Verbindungsöffnung (24) nach seiner Anlagestelle der Innenwandung des Sammlers (22) mit Durchbrechungen versehen sein, so daß das Kältemittel das Filterelement (50) nur einmal durchströmen muß.

Bei dem dargestellten Ausführungsbeispiel ist vorgesehen, daß das Filterelement (50) dicht an dem Boden des Käfigs (44) befestigt ist, so daß das gesamte Kältemittel durch das Filterelement (50) strömt.

Bei einer abgewandelten Ausführungsform wird vorgesehen, daß das Filtersieb (43) ein getrennt von dem Käfig (42) und dem Gehäuse (48) hergestelltes Bauteil ist, das zwischen diesen beiden angeordnet wird. In diesem Fall wird zweckmäßigerweise vorgesehen, daß dieses Filtersieb (43) sowohl mit dem Käfig (42) als auch mit dem Gehäuse (48) über eine lösbare Verbindung verbunden ist, so daß auch dann der gesamte Einsatz (42) in einfacher Weise nach Öffnen des Deckels (52) aus dem Sammler (22) herausgezogen werden kann.

Die Spann- oder Spreizvorrichtung aus den blattfederartigen Lamellen (49) hat den Vorteil, daß der Käfig (42) an dieser Stelle gegenüber dem Sammler (22) zentriert wird, so daß seine Lagestabilität innerhalb des Sammlers (22) erhöht wird. Bei besonders langen Käfigen (42) können deshalb oberhalb der Verbindungsöffnung (23) eine oder mehrere derartige Spann- oder Spreizvorrichtungen mit blattfederartigen Lamellen (49) vorgesehen werden, die dort in der Regel nicht mit einem Filterelement versehen werden.

## Patentansprüche

1. Kondensator für eine Klimaanlage eines Fahrzeuges mit einem vom Kältemittel durchströmten Rohrrippenblock (10), der beidseits jeweils mit einem Sammelrohr (15) versehen ist, wobei parallel zu einem der Sammelrohre ein rohrförmiger Sammler (22) angeordnet ist, der mit dem zugehörigen Sammelrohr in Strömungsverbindung steht und ein Filtersieb (28) enthält, wobei
der Sammler (22) zwischen zwei Verbindungsöffnungen (23, 24) zu dem Sammelrohr (15) einen zwangsweise mit Kältemittel durchströmten Abschnitt aufweist, in welchem das Filtersieb (28) so angeordnet ist, dass das Kältemittel das Filtersieb vollständig durchströmen muss, das Filtersieb Bestandteil eines Einsatzes (29) ist, der Sammler (22) mit einer Aufnahme für einen lösbaren Deckel (27) versehen ist, nach dessen Lösen der Einsatz (29) mit dem Filtersieb (28) aus dem Sammler (22) herausnehmbar ist
und der in den Sammler eingesetzte Einsatz (29) mit einem gegenüber der Innenwand des Sammlers abdichtenden Dichtmittel (40) und mit dem Filtersieb (28) versehen ist und aus einem rohrförmigen Kunststoffkäfig besteht.

2. Kondensator nach Anspruch 1, **dadurch gekennzeichnet, daß** das Sammelrohr (15) und der Sammler (22) als eine Einheit in Form eines Doppelrohres gestaltet sind.

## Claims

1. Condenser for an air-conditioning unit, of a vehicle, with a pipe-corrugation block (10), which is flowed through by coolant material, and which is provided, on both sides, with a collection pipe (15), whereby a tube-shaped collecting means (22), which is connected, in terms of flow, with the associated collection pipe and contains a gauze filter (28), is disposed parallel to one of the collection pipes,
wherein
the collecting means (22) comprises, between two openings (23, 24) of connection to the collection pipe (15), a section, which is by force flowed through by a coolant, in which the gauze filter (28) is arranged, such that the coolant must completely flow through the gauze filter, the gauze filter is a component part of an insert (29), the collection means (22) is provided with an uptake means for a detachable cover member (27), following the removal of which the insert (29), with the gauze filter (28), can be removed from the collecting means (22) and the insert (29) inserted into the collecting means is provided with a sealing means (40), sealing with respect to the inner wall of the collecting means, and with the gauze filter (28) and consists of a tubular plastic cage.

2. Condenser in accordance with claim 1, **characterized in that** the collection pipe (15) and the collecting means (22) are designed as a unit in the form of a double pipe.

## Revendications

1. Condenseur d'une installation de climatisation d'un véhicule automobile, comprenant un bloc tubulaire à ailettes (10) dans lequel circule un agent réfrigérant et qui est équipé sur chacun des deux côtés d'un tube collecteur (15), un collecteur tubulaire (22) qui est disposé parallèlement à l'un des tubes collecteurs étant en communication de cicurlation avec le tube collecteur correspondant et logeant un tamis filtrant (28), où
le collecteur (22) comporte entre deux trous (23, 24) de communication avec le tube collecteur (15) une partie dans laquelle circule obligatoirement l'agent réfrigérant et dans laquelle le tamis filtrant (28) est arrangé de façon que, l'agent réfrigérant doit circuler complètement à travers le tamis filtrant, le tamis filtrant fait partie d'une pièce rapportée interne (29) le collecteur (22) est équipé d'un support d'un couvercle amovible (27) après l'enlèvement duquel la pièce rapportée interne (29) peut être extraite du collecteur (22) avec le tamis filtrant et la pièce rapportée interne (29) mise dans le collecteur est équipée avec un moyen d'étanchéité par rapport au mur intérieur du collecteur et avec le tamis filtrant (29) et consiste d'un cage tubulaire de matière pastique.

2. Condenseur selon la revendication 1, **caractérisé en ce que** le tube collecteur (15) et le collecteur (22) sont conformés en un module ayant la forme d'un tube double.
